# EUROPEAN PATENT SPECIFICATION

(11) **EP 1 247 701 B1**
(45) Date of publication and mention of the grant of the patent: **17.12.2003**
(21) Application number: 01500091.2
(22) Date of filing: 03.04.2001
(51) Int. Cl.: B60R 21/09

(54) **Vehicle pedal set with device for release in case of impact**
Pedalanordnung für ein Kraftfahrzeug mit Trennvorrichtung bei einem Aufprall
Dispositif de pédale de véhicule avec mécanisme d'écartement en cas de choc

(43) Date of publication of application: 09.10.2002
(73) Proprietor: Autotech Engineering, A.I.E., 48220 Abadino (Vizcaya) (ES)
(72) Inventor: Alapont Etxaniz, Inaki Joseba, 48220 Abadino (Vizcaya) (ES)
(74) Representative: Carpintero Lopez, Francisco

(56) References cited:
- EP-A- 0 659 615
- EP-A- 0 827 874
- PATENT ABSTRACTS OF JAPAN vol. 1998, no. 03, 27 February 1998 (1998-02-27) & JP 09 286265 A (IKEDA BUSSAN CO LTD), 4 November 1997 (1997-11-04)

## Description

### OBJECT OF THE INVENTION

The present invention relates to a set of pedals incorporating a device which releases the brake pedal in the event of an impact, that is, the brake pedal is released from its anchoring to the corresponding support so that it does not constitute an obstacle in the possible displacement of the steering column caused by the impact, thereby preventing injury to the driver of the vehicle.

The releasing device is mounted on the brake and clutch pedal support and allows to attach the brake pedal to the steering column support, so that movement of this support during an impact is transmitted through the releasing device to the brake pedal. Naturally, if needed the releasing device could also be used for the clutch pedal.

### BACKGROUND OF THE INVENTION

It should not be necessary to remark that during a frontal collision of a vehicle there occurs a displacement towards the inside of the occupant's space of the engine, steering and other elements. so that in order to prevent these inwards displacements from causing impacts and thereby injury to the driver, the aforementioned components are designed so that in case of impact they undergo deformations and so that displacements take place in certain directions, so that none of these elements may hit and injure the driver, as described above.

More specifically, in case of a frontal collision a vehicle's steering column support moves downwards and forwards, as well as sideways.

This sideways movement of the steering column is hindered by the brake pedal, against which it collides during this motion, as normally the brake pedal is placed adjacent to the steering column support.

Naturally, this collision prevents the steering column to move as programmed and it becomes impossible to predict the effects of a collision and therefore also possible injuries suffered by the driver when column displacement is not as desired due to obstruction by the brake pedal.

EP 0 827 874 and EP 0 659 615 disclose a vehicle foot pedal support which in the event of a collision, deforms to release the pivoting mechanism of the pedal so that it falls to the floor.

### DESCRIPTION OF THE INVENTION

The set of pedals taught herein is designed to solve the above described problems by incorporating a releasing device placed between the steering column support and the support of the brake pedal, linking the two elements such that at the time of a frontal collision of the vehicle the steering column support pushes on said releasing device, which releases the brake pedal from its support so that the pedal falls onto the vehicle floor and allows the steering column to move sideways as was intended, so that this brake pedal is no longer an obstacle for said displacement of the steering column.

The releasing device comprises a pair of arms mounted so that they may swivel about the pedal support, with each arm consisting of two segments at approximately 90° to each other, so that in the normal, i.e. pre-impact, position one of the segments of each arm remains attached to the brake pedal and the other is attached to the steering column support, but so that said segments may reach a folded position in which they are simultaneously released from the brake pedal and the steering column support.

More specifically, one of the segments of each arm of the releasing device ends in a cylindrical protuberance which is facing that of the other arm. thereby defining in the normal position a support and rotation joint for a transverse shaft to which is connected the brake pedal, such that the shaft and pedal are thereby held and supported by these segments of the releasing device but allowing rotation of the shaft and therefore the pivoting motion of the pedal when it is acted upon.

The other segment of each arm is connected to a lug provided on the lower part of the steering column support, so that in the normal position the lug holds in place these segments in order that the releasing device maintain this position, in which the other segments of the arms are supporting the shaft and brake pedal allowing their normal operation.

With the above described construction in the event of an impact on the vehicle the steering column support moves downwards and forwards, so that the lug is released from the corresponding segments of the device arms, which are left free causing pivoting of the arms about their rotation axis, which due to the geometry of the arms causes the cylindrical protuberances of the other segments to separate, so that the brake pedal shaft loses its support and is released from it, falling to the floor. Thus, it is no longer an obstacle for the sideways motion of the steering column.

Additionally the device includes an element which acts as a pusher, herein under referred to as the detector support, which is mounted on the pedal support so that it can fold and thus, when the steering column support is displaced upon an impact it pushes against the detector support, which folds and hits the brake pedal, making the latter fall to the floor. This device is meant to prevent deformations of the pedal support and the brake shaft before they are released upon an impact, which could cause the brake shaft to be jammed and not be released.

### DESCRIPTION OF THE DRAWINGS

These and further characteristics of the invention will become apparent and be more clearly understood in view of the accompanying set of drawings of a preferred embodiment of the invention, where for purposes of illustration only and in a non-limiting manner the following is shown:

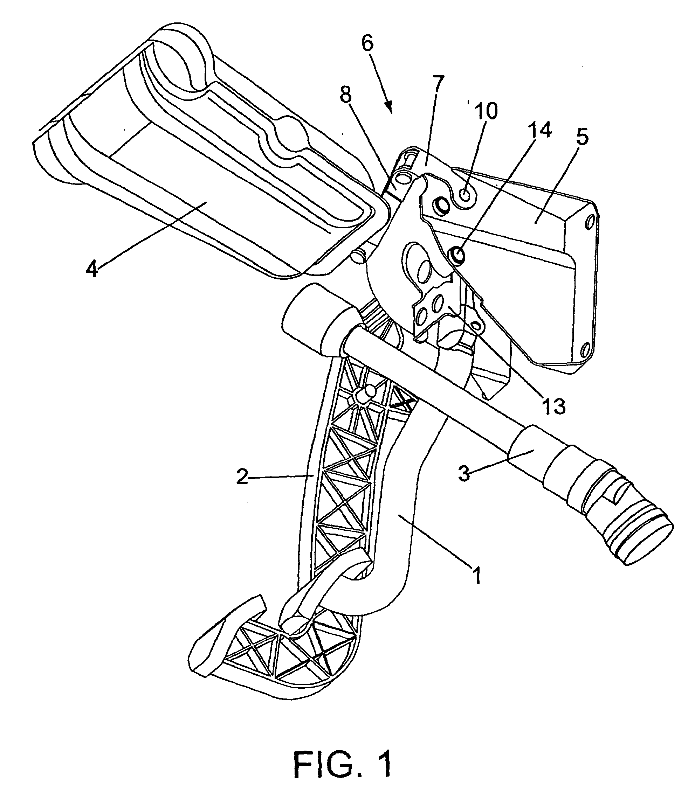

Figure 1 shows a general perspective view of the assembly comprising the pedals, steering column and the corresponding supports, with the device object of the invention, with the perspective corresponding to a frontal view of the assembly.

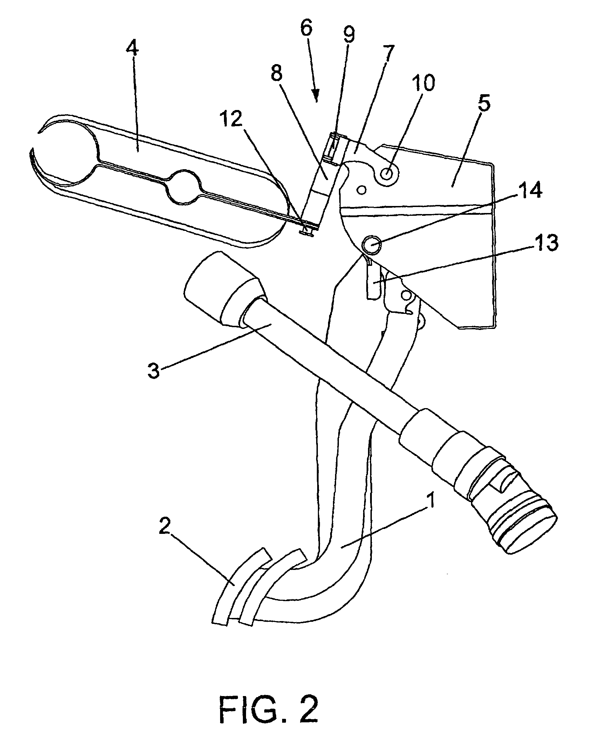

Figure 2 shows a side perspective view of the assembly shown in the previous figure, in a resting or normal operation situation for the pedals and the steering column.

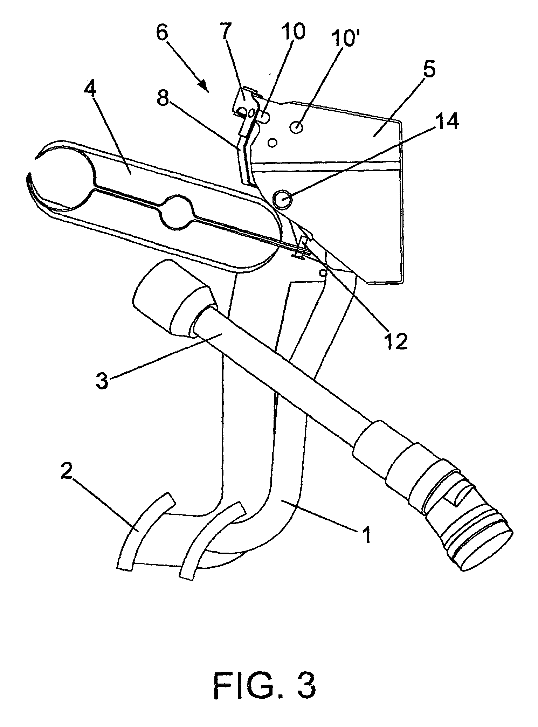

Figure 3 shows a side view as in the previous figure, after the an impact or collision of the vehicle bearing the assembly.

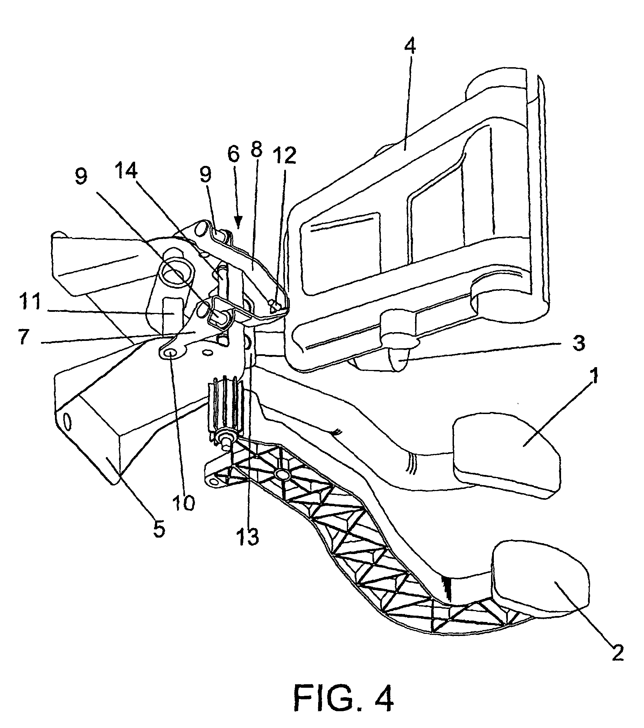

Figure 4 shows a rear perspective view of the assembly before the impact or collision, showing the construction and arrangement of the arms which comprise the device object of the invention.

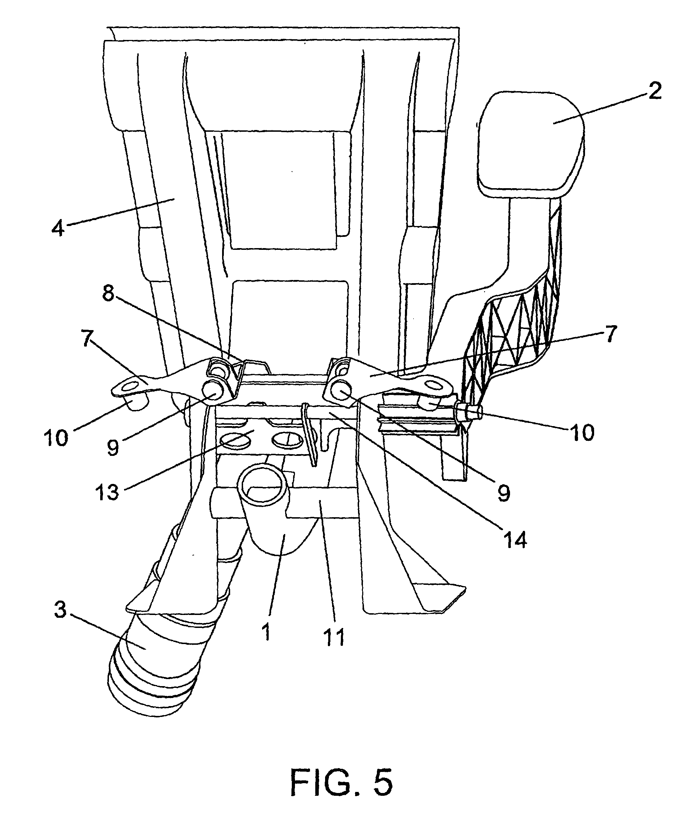

Figure 5 finally shows another perspective similar to that of the previous figure after the impact or collision, in which the brake pedal is released, with the assembly shown from the rear.

### PREFERRED EMBODIMENT OF THE INVENTION

The aforementioned figures show that the pedal set of the invention includes, as is conventional, a brake pedal (1), a clutch pedal (2), a steering column (3) and the corresponding support (4) for this steering column, as well as a support (5) for the aforementioned pedals (1) and (2).

Based on these characteristics the pedal set which is the object of this invention incorporates a releasing device which comprises a pair of arms (6) mounted on support (5) through a swivel shaft (9), with said arms (6) placed between support (4) of steering column (3) and support (5) of pedals (1) and (2), so that each arm comprises two segments (7) and (8), at an angle of approximately 90° to each other, which may occupy two different positions due to the possible swivelling of the arms on shaft (9).

Segment (7) of each arm (6) forms a lug, on the end of which is a cylindrical protrusion (10) housed in an orifice (10') provided for such purpose in the corresponding lateral support (5) of the pedals, so that protrusions (10) of the two segments (7) are placed opposite each other and form a bearing and rotation support for swivel shaft (11), to which is integrally joined brake pedal (1). In this way, when the brake pedal is operated its pivoting motion implies the rotation of shaft (11) with respect to protrusion (10) corresponding to lugs or segments (7) of arms (6), which rotation is naturally about the support (5) which is statically assembled on the vehicle.

In addition, the free end of the other segment (8) of arms (6) ends in an orthogonal bend provided with a notch, so that during the assembly of arms (6) on support (5) the bends of segments (8) are interlocked, with their notches defining an orifice for passage of a nipple (12) provided on the bottom of steering column support (4), so that said nipple (12) supports segments (8) and keeps them in their normal position, i.e. before an impact, so that in this position the other segments (7) support and allow the rotation of the shaft and brake pedal.

With these characteristics of the device, when the vehicle suffers an impact the support (4) of steering column (3) moves downwards and forwards, making nipple (12) push on arms (6), while the downwards motion of support (4) causes the exit of said nipples from the orifice determined by the notches of the bent ends of segments (8) of arms (6), which are released causing the folding of arms (6) with respect to shaft (9), resulting in the separation of segments (7) from support (5) and therefore the extraction of protrusions (10) from orifices (10') of support (5) in which they are housed, so that part (11) is released and thereby also pedal (1), with the latter ending freely on the vehicle floor so that it does not constitute an obstacle during the lateral motion of steering column (3), preventing it from causing injury to the driver of the vehicle.

To ensure that brake pedal (1) is released a pusher or detector element (13) is provided, which is mounted on support (5) so that it may fold back, by means of a swivel shaft (14), with this detector support (13) comprised by a plate with bent ends and placed vertical in its normal position, so that upon impact said plate is pushed downwards by support (4) of the steering column, making element (13) swivel and thereby causing it to collide against brake pedal (1), aiding in its release if it is locked in the support and has not been fully freed when part (11) is released.

## Claims

1. Vehicle pedal set with a device for release in case of impact comprising a brake pedal (1), a clutch pedal (2), the corresponding support (5) for attaching the pedals to the vehicle body and a releasing device mounted so that it may swivel about said support (5) and which relates support (4) of the steering column (3) to brake pedal (1), with said releasing device consisting of a pair of arms (6) which are swivel mounted on said support (5) by corresponding swivel shafts (9), such that said arms (6) form rotation and weight-bearing supports for swivel shaft (11) which is integrally joined to brake pedal (1) and thus, in the normal position, that is, before an impact occurs, when the brake pedal is stepped on it may swivel about arms (6) and therefore about support (5), while during an impact the displacement suffered by support (4) of steering column (3) causes arms (6) of shaft (9) to swivel and thereby swivel shaft (11) of brake pedal (1) to be released from these, and therefore also to be released from support (5), so that brake pedal (1) is left free and will not interfere in the sideways motion of steering column (3).

2. Vehicle pedal set with a device for release in case of impact , as claimed in claim 1, **characterised in that** each arm (6) is formed by two segments (7) and (8) at an angle of approximately 90° to each other, with segment (6) comprising a lug ending in a protrusion (10) which is housed in an orifice (10') provided for such purpose on the side of support (5) of the pedals, so that the protrusions (10) of each segment (7) are placed opposite each other to form the rotation and support means for swivel shaft (11), joined to brake pedal (1), while the other segment (8) of said arms (6) ends in a bend with a notch with the bent ends and their notches placed opposite each other when assembled, so that they define an orifice for passage of a nipple (12) of the steering column support (4), and thus in the event of an impact said nipple (12) keeps the arms in a stable position in which segments (7) support swivel shaft (11), whereas during the impact the downwards and forwards displacement of this support (4) implies that nipple (12) pushes on arms (6) and causes the extraction of nipple (12) from the notches made in the ends of segments (8) of arms (6), as well as swivelling of said arms (6) about shaft (9) of support (5), which in turn causes segments (7) to separate and protrusions (10) to be extracted from orifices (10') of support (5), with the ensuing release of part (11) and thereby of pedal (1).

3. Vehicle pedal set with a device for release in case of impact as claimed in above claims, **characterised in that** as a complement a pusher or detector support (13) is provided, which consists of a plate mounted on a swivel shaft (14) on support (5), so that the plate (13), during the impact and the ensuing displacement of support (4) of steering column (3), is pushed by said support causing it to swivel and push against brake pedal (1), aiding in the release of said pedal from lugs (9) which form the rotation shaft for part (11) joined to said brake pedal (1).

## Patentansprüche

1. Pedalanordnung für Fahrzeuge mit einer Freigabevorrichtung für den Fall eines Aufpralls (4), mit einem Bremspedal (1), einem Kupplungspedal (2), einem entsprechenden Halter (5) für die Befestigung der Pedale an der Fahrzeugkarrosserie und einer Freigabevorrichtung, die kippbar auf dem genannten Halter (5) befestigt ist, und die es ermöglicht den Halter (4) der Lenksäule (3) mit dem Bremspedal (1) zu verbinden, wobei die genannte Freigabevorrichtung aus einem Paar von Armen (6) besteht, die kippbar über entsprechende Kippachsen (9) auf dem Halter (5) befestigt sind, mit der Besonderheit, dass die genannten Arme (6) aus einem Halter für die Auflage und Drehung der Kippachse (11) bestehen, mit der das Bremspedal (1) selbst einstückig verbunden ist, so dass in Normalstellung, das heißt, vor einem Aufprall, bei Betätigung des Bremspedals, dieses kippen kann, in dem es sich in Bezug auf die Arme (6) und somit auch in Bezug auf den Halter (5) dreht, während bei einem Aufprall, das Verschieben des Halters (4) der Lenksäule (3) ein Kippen der Arme (6) der Achse (9) bewirkt und die entsprechende Freigabe der Kippachse (11) der Bremse (1) in Bezug auf diese Arme, und folglich auch in Bezug auf den Halter (5), weshalb das Bremspedal (1) freigegeben wird und nicht die seitliche Verschiebung der Lenksäule (3) behindert.

2. Pedalanordnung für Fahrzeuge mit einer Freigabevorrichtung für den Fall eines Aufpralls, nach Anspruch 1, **dadurch gekennzeichnet, dass** jeder der Arme (6) aus zwei Schenkel (7) und (8) besteht, die ungefähr in einem Winkel von 90° zueinander angeordnet sind, wobei der Schenkel (6) aus einer Art Befestigungsauge besteht, das in einer Erhebung (10) endet, welche in einer zu diesem Zweck seitlich am Halter (5) der Pedale vorgesehenen Öffnung (10') gelagert ist, so dass die Erhebungen (10) beider Schenkel (7) einander gegenüber zu liegen kommen, um den Halter für die Auflage und Drehung der Kippachse (11) zu bilden, die einstückig mit dem Bremspedal (1) selbst verbunden ist, während der andere Schenkel (8) dieser Arme (6) am Ende eine Abwinkelung mit einer Kerbe aufweist, wobei die abgewinkelten Endabschnitte und die Kerben einander bei der Montage gegenüberliegen, um eine Öffnung oder einen Durchtritt für einen Zapfen (12) zu bilden, der zu dem Lenksäulenhalter (4) gehört, so dass der genannte Zapfen (12) vor dem Aufprall die Arme in einer stabilen Position hält, in der die Schenkel (7) die Kippachse (11) abstützen, während bei einem Aufprall das Verschieben dieses Halters (4) nach unten und nach vorne die Schubkraft (12) dieses Zapfens (12) auf die Arme (6) überträgt, und so ein Heraustreten des Zapfens (12) aus den Kerben an den Enden der Schenkel (8) der Arme (6) bewirkt, sowie das Kippen der Arme (6) in Bezug auf die Achse (9) des Halters (5), wobei dieses Kippen die Trennung der Schenkel (7) bewirkt und das Austreten der Erhebungen (10) aus den Öffnungen (10') des Halters (5), mit der darausfolgenden Freigabe des Teils (11) und somit des Pedals (1).

3. Pedalanordnung für Fahrzeuge mit einer Freigabevorrichtung für den Fall eines Aufpralls nach den vorstehenden Ansprüchen, **dadurch gekennzeichnet, dass** ergänzend eine Schubvorrichtung oder ein Sensorhalter (13) eingebaut ist, der aus einer Platine besteht, die über eine Kippachse (14) auf dem Halter (5) befestigt ist, wobei diese Platine (13) bei dem Aufprall und der entsprechenden Verschiebung des Halters (4) der Lenksäule (3) von dieser angestoßen wird, wodurch ihr Kippen bewirkt wird und die darausfolgende Schubkraft auf das Bremspedal (1), weshalb diese Platine beim Lösen letzeren mitwirkt, nach dessen Freigabe in Bezug auf die Zapfen (9), die die Drehachse für das einstückig mit dem genannten Bremspedal (1) verbundene Teil (11) bilden.

## Revendications

1. Ensemble de pédales pour véhicules avec dispositif de libération en cas de choc (4), comprenant une pédale de frein (1), une pédale d'embrayage (2), le support (5) de fixation des pédales à la carrosserie du véhicule, et un dispositif de libération qui est monté basculant sur ledit support (5) permettant d'associer le support (4) de la colonne de direction (3) à la pédale de frein (1), ce dispositif de libération étant constitué de deux bras (6) montés basculants sur le support (5) à travers des axes respectifs de basculement (9), **caractérisé en ce que** ces bras (6) forment un support d'appui et de rotation de l'axe (11) de basculement sur lequel est solidarisée la pédale de frein (1), de sorte qu'en position normale, c'est-à-dire avant le choc, en agissant sur la pédale de frein, celle-ci peut basculer en tournant par rapport aux bras (6) et donc par rapport au support (5), alors que pendant le choc, le déplacement que subit le support (4) de la colonne de direction (3) provoque le basculement des bras (6) de l'axe (9) et la libération de l'axe (11) de basculement du frein (1) par rapport à ceux-ci, et en conséquence, par rapport au support (5), ce qui permet à la pédale de frein (1) d'être libérée et ne pas gêner le déplacement latéral de la colonne de direction (3).

2. Ensemble de pédales pour véhicules avec dispositif de libération en cas de choc, selon la revendication 1, **caractérisé en ce que** chacun des bras (6) est constitué de deux branches (7) qui (8) forment un angle d'environ 90° entre elles, la branche (6) étant configurée par une espèce d'oreillette terminée par une protubérance (10) qui se loge dans un orifice (10') prévu à cet effet sur le côté du support (5) des pédales, de manière que les protubérances (10) des deux branches (7) sont face à face pour constituer le support d'appui et de rotation de l'axe de basculement (11) solidaire de la pédale de frein (1), alors que l'autre branche (8) de ces bras (6) présente un coude extrême avec une encoche, les parties extrêmes et les encoches demeurant face à face lors du montage pour configurer un orifice ou passage pour un téton (12) appartenant au support (4) de la colonne de direction, de manière qu'avant le choc ledit téton (12) maintient les bras dans une position stable dans laquelle les branches (7) supportent l'axe de basculement (11), alors que pendant le choc, le déplacement vers le bas et en avant de ce support (4) implique une poussée du téton (12) sur les bras (6), ce qui provoque l'extraction du téton (12) des encoches configurées aux extrémités des branches (8) des bras (6), ainsi que le basculement des bras (6) par rapport à l'axe (9) du support (5), basculement qui produit la séparation des branches (7) et l'extraction des protubérances (10) des orifices (10') du support (5), avec la libération qui s'en suit de la pièce (11) et donc de la pédale (1).

3. Ensemble de pédales pour véhicules avec dispositif de libération en cas de choc, selon les revendications précédentes, **caractérisé en ce que** complémentairement il inclut un élément poussoir ou support détecteur (13) configuré par une platine montée à travers un axe de basculement (14) sur le support (5), platine (13) qui, au moment du choc et du déplacement correspondant du support (4) de la colonne de direction (3), est poussée par celui-ci, ce qui produit le basculement puis la poussée de celle-ci sur la pédale de frein (1), en collaborant dans le détachement de celle-ci après sa libération par rapport aux tétons (9) qui constituent l'axe de rotation pour la pièce (11) solidaire de ladite pédale de frein (1).
